# EUROPÄISCHE PATENTSCHRIFT

(11) **EP 3 627 042 B1**
(45) Veröffentlichungstag und Bekanntmachung des Hinweises auf die Patenterteilung: **16.06.2021**
(21) Anmeldenummer: 19198567.0
(22) Anmeldetag: 20.09.2019
(51) Int. Cl.: F21V 8/00, F21V 13/02, F21S 8/06, F21V 7/00, F21Y 115/10, F21Y 103/10

(54) **LEUCHTE MIT PLATTENFÖRMIGEM LICHTLEITELEMENT**
LUMINAIRE WITH PLATE-SHAPED LIGHT GUIDE ELEMENT
LUMINAIRE POURVU D'UN ÉLÉMENT DE GUIDE DE LUMIÈRE SOUS LA FORME DE PLAQUE

(30) Priorität: 20.09.2018 DE 102018123128
(43) Veröffentlichungstag der Anmeldung: 25.03.2020
(73) Patentinhaber: Zumtobel Lighting GmbH, 6850 Dornbirn (AT)
(72) Erfinder: Machate, Andreas, 88239 Wangen im Allgäu (DE)
(74) Vertreter: Thun, Clemens

(56) Entgegenhaltungen:
- EP-A2- 2 924 337
- DE-A1- 10 011 378
- DE-A1-102012 019 522
- US-A- 6 161 939
- US-A1- 2008 273 323

## Beschreibung

Die Erfindung betrifft eine Leuchte mit einem plattenförmigen Lichtleitelement.

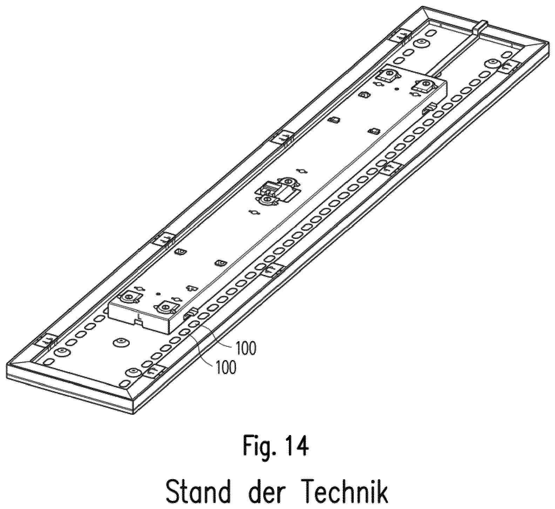

Fig. 14 zeigt eine perspektivische Ansicht einer derartigen Leuchte in Form einer Deckenleuchte von schräg oben. Die Leuchte umfasst ein horizontal orientiertes plattenförmiges Lichtleitelement und eine LED-Lichtquelle (LED: Licht emittierende Diode). Ein von der LED-Lichtquelle abgestrahltes Licht fällt randseitig in das Lichtleitelement ein und tritt schließlich nach unten aus dem Lichtleitelement wieder aus. So lässt sich eine nach unten gerichtete Lichtabgabe der Leuchte bewirken, die üblicherweise zur Erzeugung einer direkten Beleuchtung genutzt wird. Auf der Oberseite des Lichtleitelements befindet sich eine reflektierende Platte, die randseitig mehrere Öffnungen 100 aufweist. Über diese Öffnungen 100 wird ein Teil des Lichts nach oben abgegeben. Dies wird in der Regel zur Erzeugung einer indirekten Beleuchtung verwendet.

Betrachtet man die Deckenleuchte von unten, zeichnen sich die Öffnungen 100 durch eine reduzierte Lichtabgabe ab, also als Dunkelstellen. Dieser im Allgemeinen unerwünschte Effekt lässt sich auch durch Verwendung einer Diffusorfolie nicht zufriedenstellend beheben.

US 2008/273323 A1 bezieht sich auf eine Leuchte mit einer Hauptlichtquelle, deren Licht mit dem Licht einer zusätzlichen farbigen Lichtquelle gemischt und anschließend emittiert wird. Auf diese Weise kann dem Weißlicht der Hauptlichtquelle farbiges Licht beigemischt und ein gemischter Farbton der Hauptbeleuchtung erzielt werden. Zur besseren Wahrnehmung der Farbkomponente, insbesondere dann, wenn der Unterschied der Lichtströme beider Lichtquellen sehr groß ist, wird ein Teil des von der zusätzlichen Farblichtquelle abgegebenen Lichtes auf die Rückseite oder Seite des Leuchtengehäuses gerichtet, sodass der im Wesentlichen von der Hauptlichtquelle beleuchtete Bereich durch Licht der farbintensiveren Teillichtquelle begrenzt wird. Auf diese Weise entstehen besonders angenehme Beleuchtungsverhältnisse, die für einen Betrachter optisch sehr attraktiv wirken, weshalb sich diese Vorgehensweise für das Active-Light-Strategy-Konzept gut eignet.

DE 10 2012 019522 A1 betrifft eine Flächenleuchte mit einer oder mehreren schichtweisen zusammengesetzten lichtleitenden Platten, über deren Stirnseiten LED-Licht einseitig eingekoppelt, sowie großflächig nach oben und unten ausgekoppelt wird. Das Verhältnis der Lichtabgabe zwischen oben und unten kann auf verschiedene Weise beeinflusst werden: unterschiedliche Platten- bzw. Schichtstärken, diverse reflektierende streuende Folien und/oder Oberflächenstrukturen auf oder zwischen den Platten (z.B. durch bedampfte Metallschichten, Mikroprismenstrukturen, usw.), homogenes Dotieren der Platten mit lichtstreuenden Partikeln, vertikale Verschiebbarkeit der LED-Zeilen relativ zu dem Schichtstapel usw. Die Lichtabgabe nach Außen erfolgt durch rechteckige aneinandergereihte Öffnungen, sogenannte Lichtaustrittsflächen, die den Lichtaustritt sowohl nach oben als auch nach unten begrenzen.

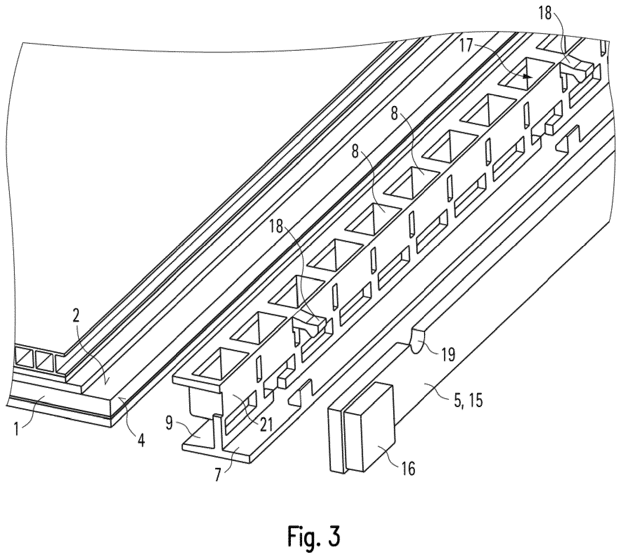

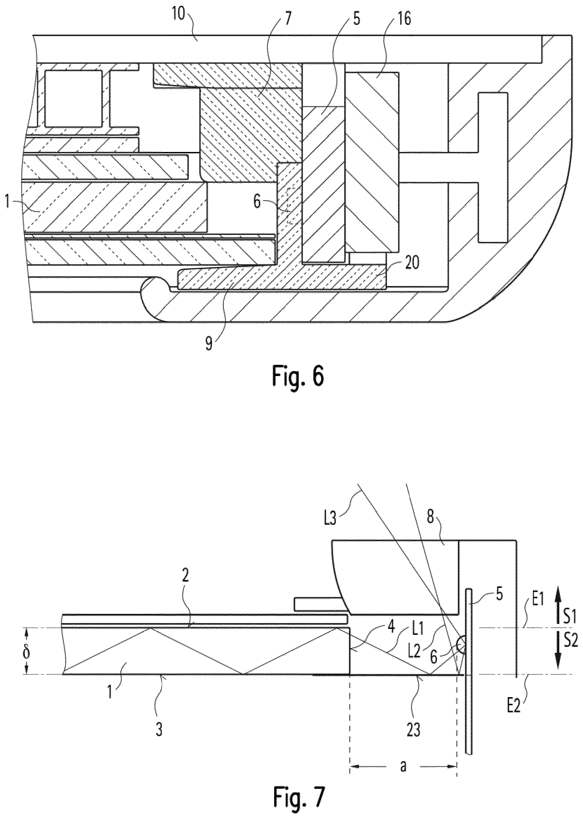

US 6 161 939 A bezieht sich auf kontrastarme Innenbeleuchtungskörper mit einer von einem Gehäuse getragenen Lichtquelle mit einer horizontalen Reflektor-Anordnung, einer oberen reflektierenden Oberfläche und einer lichtemittierenden Oberfläche auf der Unterseite in welches Licht einer Leuchtstoffröhre eingekoppelt und bis zum Ende des Reflektorflügels weitergeleitet, teilweise auch ausgekoppelt wird und so, von unten aus gesehen, für eine illuminierte Erscheinung sorgt. Gemäß verschiedener Ausführungsformen kann die Leuchte eine indirekte als auch eine direkte Innenbeleuchtung, sogar beides, darstellen. Aus den Figuren 3 und 6 geht hervor, dass Licht die Gehäusewand durchdringt und an die Decke strahlt, was dadurch zu erklären ist, dass das Gehäuse Öffnungen aufzuweisen scheint.

DE 100 11 378 A1 betrifft eine Leuchte zur Abgabe eines direkten und eines indirekten Lichtanteils, wobei beide Teile stärker als bisher unabhängig voneinander variiert werden können. Der reflektierende Hohlraum wird durch zwei geneigte Dachhälften in eine obere und eine untere Gehäusehälfte geteilt. An den seitlichen Schmalseiten ist jeweils eine Lampe angeordnet, welche über einen Einkoppelreflektor Licht in den Hohllichtleiter koppelt. Die Lampen erzeugen zu beiden Seiten des Gehäuses Licht, welches einerseits über die Lichtkoppel-Einrichtung nach unten abgegeben wird, andererseits über die Abfolge von rechteckigen Öffnungen nach oben.

EP 2 924 337 A2 bezieht sich auf eine Leuchte mit einem in einem Leuchtengehäuse angeordneten Leuchtmittel sowie einem in Strahlungsrichtung vor dem Leuchtmittel angeordneten Lichtleiter, welcher das Licht auf einer Teilfläche der Lichtaustrittsfläche verteilt und entblendet. Das punktuell erzeugte LED-Licht wird so über eine möglichst große Fläche verteilt und erzeugt eine verhältnismäßig homogene direkte Beleuchtung nach unten. Eine weitere Entblendung erfolgt durch einen Reflektor, einer sich in Strahlrichtung pyramidal oder auch konisch aufweitenden Fläche.

Der Erfindung liegt die Aufgabe zugrunde, eine entsprechende verbesserte Leuchte anzugeben. Insbesondere soll sich die Leuchte zur Erzeugung einer Direkt- und einer Indirekt-Beleuchtung eignen und dabei eine nach unten gerichtete, gleichmäßig hell erscheinende Lichtabgabefläche aufweisen.

Diese Aufgabe wird gemäß der Erfindung mit den in dem unabhängigen Anspruch genannten Gegenständen gelöst. Besondere Ausführungsarten der Erfindung sind in den abhängigen Ansprüchen angegeben.

Gemäß der Erfindung ist eine Leuchte vorgesehen, die ein plattenförmiges Lichtleitelement mit einem ersten großen Oberflächenbereich aufweist, durch den eine Ebene festgelegt ist. Weiterhin weist das Lichtleitelement einen, dem ersten großen Oberflächenbereich gegenüberliegenden, zweiten großen Oberflächenbereich auf, durch den eine weitere Ebene festgelegt ist, und einen schmalen Randflächenbereich, durch den der zweite große Oberflächenbereich mit dem ersten großen Oberflächenbereich verbunden ist. Dabei ist durch die Ebene eine erste Seite von einer zweiten Seite getrennt, wobei sich der zweite große Oberflächenbereich auf der zweiten Seite der Ebene befindet. Weiter weist die Leuchte eine LED-Lichtquelle mit LEDs zum Abstrahlen eines Lichts auf, wobei die Gestaltung derart ist, dass das Licht zumindest teilweise über den Randflächenbereich in das Lichtleitelement einstrahlt und im Weiteren das Lichtleitelement über den zweiten großen Oberflächenbereich zur Erzielung einer direkten Beleuchtung wieder verlässt. Weiterhin umfasst die Leuchte ein längliches, sich entlang des Randflächenbereichs erstreckendes Lichtführungselement mit Lichtöffnungen, wobei die Gestaltung derart ist, dass ein Anteil des Lichts zu der ersten Seite strahlt und dabei zur Erzielung einer indirekten Beleuchtung durch die Lichtöffnungen hindurchstrahlt, wobei das Lichtführungselement weiterhin zum Halten der LED-Lichtquelle gestaltet ist.

Die Erfindung ist dadurch gekennzeichnet, dass die Lichtöffnungen als Reflektoren gestaltet und durch sich vertikal erstreckende Wandbereiche begrenzt sind, die hochreflektierend gestaltet sind, wobei der Randflächenbereich so dicht bei den LEDs positioniert ist, dass praktisch das gesamte Licht in das Lichtleitelement einstrahlt und das Lichtleitelement eine Oberflächenstrukturierung aufweist, durch die ein Teil des in das Lichtleitelement eingestrahlten Lichts zu den Lichtöffnungen des Lichtführungselements hin gelenkt wird.

Durch das Lichtführungselement lässt sich besonders geeignet eine Lichtabgabe der Leuchte zur Erzielung einer indirekten Beleuchtung bewirken. Dabei lässt sich auch besonders geeignet eine größere Lichtmenge für die indirekte Beleuchtung bereitstellen. Dadurch, dass das Lichtführungselement auch zum Halten der LED-Lichtquelle gestaltet ist, lässt sich ein entsprechendes gesondertes Bauteil einsparen.

Außerdem können im Vergleich zum eingangs genannten Stand der Technik die Lichtöffnungen näher am Rand des Lichtleitelements vorgesehen werden als die entsprechenden Öffnungen in der reflektierenden Platte; dies ist insbesondere vorteilhaft, weil hierdurch ein grundsätzlich höherer Wirkungsgrad erzielt werden kann.

Vorzugsweise ist das Lichtführungselement weiterhin auch zum Halten des Lichtleitelements gestaltet. Dies ist vorteilhaft, weil hierdurch auf ein separates Bauteil zum Halten des Lichtleitelements verzichtet werden kann.

Vorzugsweise ist die LED-Lichtquelle durch das Lichtführungselement so positioniert gehalten, dass sich die LEDs zwischen der Ebene und der weiteren Ebene befinden, vorzugsweise mittig zwischen der Ebene und der weiteren Ebene. So lässt sich eine besonders geeignete Verteilung des Lichts zur Erzielung der direkten Beleuchtung einerseits und zur Erzielung der indirekten Beleuchtung andererseits bewirken. Vorzugsweise weist das Lichtführungselement einen, sich auf der zweiten Seite der Ebene parallel zu der Ebene erstreckenden Flanschbereich zum Halten des Lichtleitelements auf. So lässt sich besonders geeignet bewirken, dass bei einer Betrachtung des Lichtleitelements von der zweiten Seite aus keine dunklen Stellen erscheinen, insbesondere, wenn die Gestaltung weiterhin derart ist, dass sich die Lichtöffnungen vollständig innerhalb einer mit Bezug auf die Ebene normalen Projektion des Flanschbereichs befinden. Insbesondere kann so - im Vergleich zu dem eingangs genannten Stand der Technik - vorteilhaft auf eine Diffusorfolie verzichtet werden. Auf diese Weise lässt sich erzielen, dass das Lichtleitelement besonders brillant erscheint.

Vorzugsweise weist die Leuchte weiterhin ein Gehäuse mit Gehäuseöffnungen auf, die so gestaltet sind, dass der Anteil des Lichts, der durch die Lichtöffnungen des Lichtführungselements hindurch strahlt, zumindest teilweise auch durch die Gehäuseöffnungen des Gehäuses hindurch strahlt. So lässt sich bei vorteilhaften optischen Eigenschaften ein geeigneter Schutz der Leuchte bewirken.

Vorzugsweise ist zwischen dem Randflächenbereich und den LEDs ein Abstand gebildet, so dass ein Teil des Lichts nicht in das Lichtleitelement einfällt. Hierdurch lässt sich erzielen, dass besonders viel Licht für die indirekte Beleuchtung zur Verfügung steht. Weiterhin vorzugsweise ist die Gestaltung dabei derart, dass der Teil des Lichts, der nicht in das Lichtleitelement einfällt, zumindest teilweise durch die Lichtöffnungen hindurch strahlt. So lässt sich die indirekte Beleuchtung gezielt formen.

Besonders eignet sich die Leuchte in Form einer Pendelleuchte oder einer Deckenanbauleuchte.

Die Erfindung wird im Folgenden anhand von Ausführungsbeispielen und mit Bezug auf die Zeichnungen näher erläutert. Es zeigen:
- Fig. 1: eine Querschnitt-Skizze zu einer Lichtabgabe-Anordnung einer anmeldungsgemäßen Leuchte gemäß einem ersten Ausführungsbeispiel,
- Fig. 2: eine perspektivische Ansicht von schräg oben hierzu,
- Fig. 3: eine der Fig. 2 entsprechende Darstellung nach Art einer Explosionsdarstellung,
- Fig. 4: eine, der Fig. 3 entsprechende Darstellung unter einem anderen Blickwinkel,
- Fig. 5: eine perspektivische Ansicht eins Eckbereichs der Leuchte mit der in Fig. 2 gezeigten Lichtabgabe-Anordnung und mit einem Gehäuse,
- Fig. 6: eine Querschnitt-Skizze zu einer weiteren Ausführung der Lichtabgabe-Anordnung, bei der zwischen den LEDs und dem Lichtleitelement ein Abstand vorgesehen ist,
- Fig. 7: eine Prinzip-Skizze zur Illustration der Strahlengänge im Fall einer Lichtabgabe-Anordnung, bei der zwischen den LEDs und dem Lichtleitelement ein Abstand vorgesehen ist,
- Fig. 8: eine perspektivische Schnitt-Skizze zu einem Randbereich einer anmeldungsgemäßen Leuchte,
- Fig. 9: eine perspektivische Ansicht einer anmeldungsgemäßen Leuchte in Form einer Pendelleuchte,
- Fig. 10: ein Eckbereich der in Fig. 9 gezeigten Leuchte bei näherer Sicht,
- Fig. 11: eine perspektivische Schnitt-Skizze zu einem Randbereich einer anmeldungsgemäßen Lichtabgabe-Anordnung mit einem Kühlkörper,
- Fig. 12: eine Explosionsdarstellung hierzu,
- Fig. 13: eine Ausführung mit einer Schraubbuchse des Lichtführungselement der Lichtabgabe-Anordnung für eine Verbindung zwischen dem Lichtführungselement und einem Gehäuse der Leuchte,
- Fig. 14: eine perspektivische Ansicht von schräg oben auf eine Leuchte gemäß dem Stand der Technik.

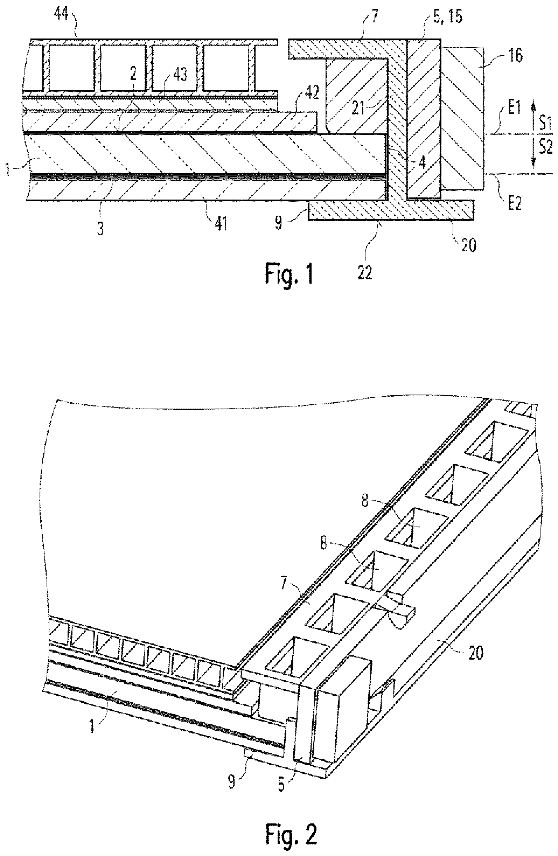

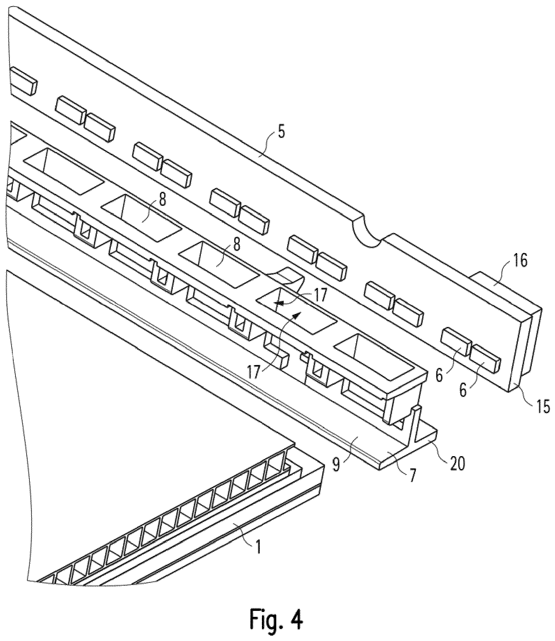

Fig. 1 zeigt in einer Querschnitt-Skizze einen Randbereich einer Lichtabgabe-Anordnung einer anmeldungsgemäßen Leuchte gemäß einem ersten Ausführungsbeispiel. Fig. 2 zeigt eine perspektivische Ansicht hierzu von schräg oben und die Figuren 3 und 4 entsprechende Explosionsdarstellungen. Die Lichtabgabe-Anordnung umfasst ein plattenförmiges Lichtleitelement 1 mit einem ersten großen Oberflächenbereich 2, einem, dem ersten großen Oberflächenbereich 2 gegenüberliegenden, zweiten großen Oberflächenbereich 3 und mit einem schmalen Randflächenbereich 4, durch den der zweite große Oberflächenbereich 3 mit dem ersten großen Oberflächenbereich 2 verbunden ist.

Im Rahmen dieser Beschreibung wird der Einfachheit halber davon ausgegangen, dass das Lichtleitelement 1 gegenüber der Vertikalen so ausgerichtet ist, dass der erste große Oberflächenbereich 2 horizontal ausgerichtet ist und dabei nach oben weist und der zweite große Oberflächenbereich 3 nach unten. Diese Ausrichtung ist für den Betrieb der Leuchte bevorzugt, allerdings kann im Allgemeinen auch eine hiervon abweichende Ausrichtung für den Betrieb vorgesehen sein, beispielsweise eine leicht schräge Ausrichtung des Lichtleitelements 1.

Wie in Fig. 1 skizziert, ist durch den ersten großen Oberflächenbereich 2 eine Ebene E1 - hier also eine horizontale Ebene - festgelegt und durch den zweiten großen Oberflächenbereich 3 eine weitere Ebene E2, die vorzugsweise parallel zu der zuerst genannten Ebene E1 orientiert ist.

Durch die Ebene E1 ist eine erste Seite S1, die hier dem oberen Halbraum entspricht, von einer zweiten Seite S2 getrennt, die hier dem unteren Halbraum entspricht. Somit befindet sich der zweite große Oberflächenbereich 3 auf der zweiten Seite S2 der Ebene E1.

Im gezeigten Beispiel weist das Lichtleitelement 1 insgesamt eine rechteckige Form auf, so dass die beiden genannten großen Oberflächenbereiche 2, 3 dementsprechend rechteckig geformt sind. Durch die Form des Lichtleitelements 1 sind somit vier geradlinige Randbereiche gebildet, wobei sich der Randflächenbereich 4 entlang einer dieser vier Randbereiche erstreckt, vorzugsweise über die gesamte Länge des entsprechenden Randbereichs.

Die Lichtabgabe-Anordnung umfasst weiterhin eine LED-Lichtquelle 5 mit LEDs 6 zum Abstrahlen eines Lichts, wobei die Gestaltung derart ist, dass das Licht zumindest teilweise über den Randflächenbereich 4 in das Lichtleitelement 1 einstrahlt und im Weiteren das Lichtleitelement 1 über den zweiten großen Oberflächenbereich 3 zur Erzielung einer direkten Beleuchtung wieder verlässt. Vorzugsweise sind die LEDs 6 - wie in Fig. 4 skizziert - entlang einer sich zwischen der Ebene E1 und der weiteren Ebene E2 erstreckenden, hier horizontalen Geraden angeordnet.

Insbesondere können die LEDs 6 auf zumindest einer länglichen Platine 15 angeordnet sein, die sich parallel zum Randflächenbereich 4 erstreckend angeordnet ist. Vorzugsweise erstreckt sich die LED-Lichtquelle 5 über die gesamte Länge des Randflächenbereichs 4, so dass das von den LEDs 6 abgestrahlte Licht entlang des gesamten Randflächenbereichs 4 in das Lichtleitelement 1 einstrahlt. Weiterhin vorzugsweise ist die Platine 15 vertikal orientiert; hierdurch ergibt sich eine besonders gute Einstrahlung des Lichts in das Lichtleitelement 1.

Im gezeigten Beispiel weist die LED-Lichtquelle 5 weiterhin auf der Platine 15, und zwar auf einer, den LEDs 6 gegenüberliegenden Seite ein Anschlusselement 16, beispielsweise in Form, einer Buchse, auf, das zur Verbindung mit einer Stromquelle zur elektrischen Versorgung der LEDs 5 ausgestaltet ist. Vorzugsweise ist das Anschlusselement 16 - wie in den Figuren skizziert - an einem Endbereich der Platine 15 angeordnet.

Weiterhin umfasst die Lichtabgabe-Anordnung ein längliches, sich entlang des Randflächenbereichs 4 erstreckendes Lichtführungselement 7 mit Lichtöffnungen 8. Vorzugsweise ist das Lichtführungselement 7 so lang, dass es sich entlang des gesamten Randflächenbereichs 4 erstreckt.

Dabei ist die Gestaltung derart, dass ein Anteil des Lichts zu der ersten Seite S1, hier also nach oben in den oberen Halbraum strahlt und dabei zur Erzielung einer indirekten Beleuchtung durch die Lichtöffnungen 8 hindurchstrahlt. Die Lichtöffnungen 8 weisen vorzugsweise eine Erstreckung auf, die "orthogonal" zum Lichtleitelement 1 - hier nach oben - gerichtet ist.

Wenn für jede der LEDs 6 eine Lichtöffhung 8 vorgesehen ist, lässt sich erzielen, dass besonders viel Licht nach oben abgestrahlt wird. Es kann aber auch vorgesehen sein, dass für einen Teil der LEDs 6 keine Lichtöffnung 8 vorgesehen ist, also beispielsweise, entlang der Reihe der LEDs 6 betrachtet, lediglich für jede zweite oder jede dritte oder jede vierte LED 6 u. s. w., dann lässt sich erzielen, dass entsprechend weniger Licht nach oben abgegeben wird.

Im gezeigten Beispiel ist vorgesehen, dass für jede LED 6 eine Lichtöffnung 8 vorgesehen ist, wobei für zwei benachbarte LEDs 6 eine gemeinsame Lichtöffnung 8 dient.

Durch das Lichtführungselement 7 lässt sich dieser Anteil des Lichts besonders geeignet lenken. Die Lichtöffnungen 8 sind als Reflektoren gestaltet. Die Lichtöffnungen 8 sind durch sich vertikal erstreckende Wandbereiche begrenzt, die hochreflektierend gestaltet sind.

Außerdem ist das Lichtführungselement 7 funktionell vorteilhaft zum Halten der LED-Lichtquelle 5 gestaltet. Im gezeigten Beispiel ist montagefreundlich zum Halten der LED-Lichtquelle 5 an dem Lichtführungselement 7 eine Rastverbindung vorgesehen. Beispielsweise kann das Lichtführungselement 7 hierzu Rastfortsätze 18 aufweisen, die in korrespondierend gestaltete Rastausnehmungen 19 eingreifen, die an der LED-Lichtquelle 5, beispielsweise an der Platine 15 ausgebildet sind. Weiterhin kann das Lichtführungselement 7 hierzu einen Trägerbereich 20 aufweisen, der zur Unterstützung der LED-Lichtquelle 5 gestaltet ist. Im gezeigten Beispiel liegt die LED-Lichtquelle 5 - hier mit der Platine 15 - auf dem Trägerbereich 20 auf.

Vorzugsweise weist das Lichtführungselement 7 einen vertikalen Wandbereich 21 auf, der sich einerseits über die Ebene E1 nach oben hinaus erstreckt und dort zur Bildung der Lichtöffnungen 8 beiträgt und der sich andererseits nach unten über die Ebene E1 hinaus erstreckt, wobei sich in diesem Bereich unterhalb der Ebene E1 der Trägerbereich 20 von dem Wandbereich 21 abstehend erstreckt.

Weiterhin vorzugsweise ist das Lichtführungselement 7 außerdem zum Halten des Lichtleitelements 1 gestaltet. Hierzu kann das Lichtführungselement 7 einen, sich auf der zweiten Seite S2 der Ebene E1 bzw. unterhalb der Ebene E1, sich parallel zu der Ebene E1 erstreckenden Flanschbereich 9 aufweisen. Vorzugsweise erstreckt sich der Flanschbereich 9 dabei über die gesamte Länge des Lichtführungselements 7.

Vorzugsweise ist die Gestaltung weiterhin derart, dass sich der Flanschbereich 9 vertikal unterhalb der Lichtöffnungen 8 befindet. Besonders bevorzugt ist die Gestaltung weiterhin derart ist, dass sich die Lichtöffnungen 8 vollständig innerhalb einer mit Bezug auf die Ebene E1 normalen Projektion des Flanschbereichs 9 befinden. Auf diese Weise lässt sich vermeiden, dass sich bei Blick auf das Lichtleitelement 1 von unten an denjenigen Stellen, an denen Licht durch die Lichtöffnungen 8 nach oben strahlt, dunkle Bereiche zu erkennen sind. Dies ist insbesondere ein Vorteil gegenüber dem eingangs genannten Stand der Technik.

Im gezeigten Beispiel ist der Flanschbereich 9 mit Bezug auf den vertikalen Wandbereich 21 dem Trägerbereich 20 gegenüberliegend gestaltet. Dabei ist weiterhin vorzugsweise durch den Flanschbereich 9 und den Trägerbereich 20 eine nach unten weisende Außenfläche 22 des Lichtführungselements 7 gebildet, die sich vorzugsweise plan und vorzugsweise horizontal erstreckt.

Weiterhin vorzugsweise ist die Gestaltung derart, dass die LED-Lichtquelle 5 durch das Lichtführungselement 7 so positioniert gehalten ist, dass sich die LEDs 6 zwischen der Ebene E1 und der weiteren Ebene E2 befinden, insbesondere mittig zwischen der Ebene E1 und der weiteren Ebene E2. Dies ist so auch der perspektivischen Schnittdarstellung der Fig. 6 zu entnehmen, in der außer der Lichtabgabe-Anordnung auch noch ein Gehäuse 10 der Leuchte gezeigt ist.

Die Lichtöffnungen 8 sind vorzugsweise mit einem lichtdurchlässigen Element abgedeckt, beispielsweise durch eine Diffusorfolie oder durch eine Linse. Dabei können die Lichtöffnungen 8 jeweils einzeln mit einem entsprechenden Element abgedeckt sein, es kann alternativ aber auch ein entsprechend durchgehendes Element vorgesehen sein, das alle Lichtöffnungen 8 abdeckt. Durch diese Gestaltung lässt sich vermeiden, dass Staub in die Lichtöffnungen 8 eindringt. Außerdem lässt sich so das durch die Lichtöffnungen 8 hindurchstrahlende Licht optisch beeinflussen.

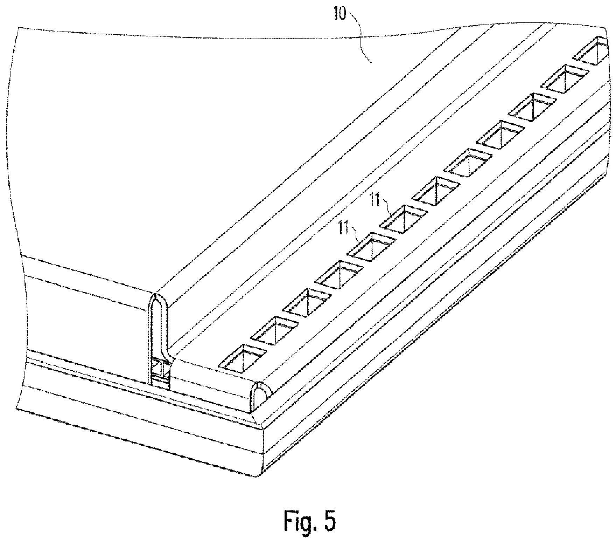

Das Gehäuse 10 weist, wie in Fig. 5 beispielhaft skizziert, vorzugsweise Gehäuseöffnungen 11 auf, die so gestaltet sind, dass der Anteil des Lichts, der durch die Lichtöffnungen 8 des Lichtführungselements 7 hindurch strahlt, zumindest teilweise auch durch die Gehäuseöffnungen 11 des Gehäuses 10 hindurch strahlt. In der gezeigten Ausführung sind die Gehäuseöffnungen 11 als vertikale Verlängerungen der Lichtöffnungen 8 gestaltet. So kann das Licht geeignet aus dem Gehäuse 10 heraus nach oben strahlen und die gewünschte indirekte Beleuchtung erzeugen.

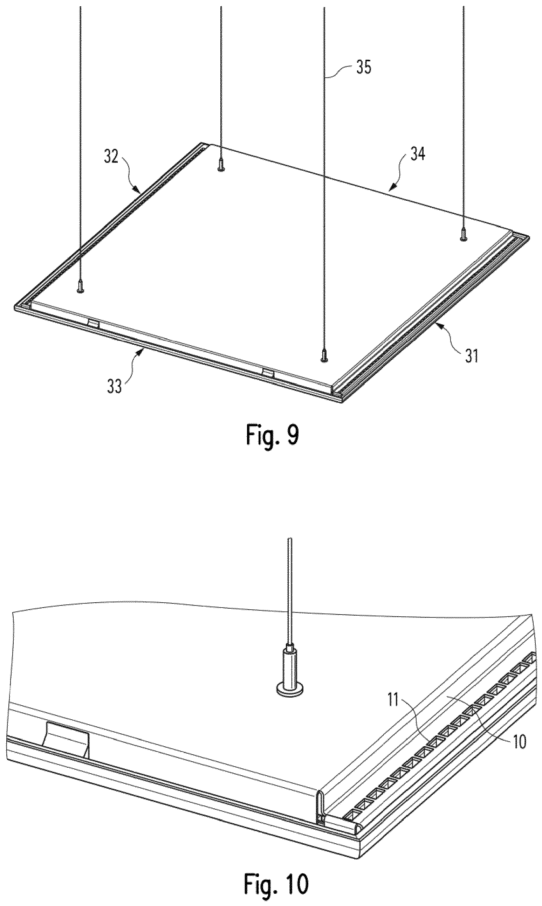

In den Figuren 9 und 10 ist eine anmeldungsgemäße Leuchte in Form einer Pendelleuchte gezeigt, wobei in Fig. 10 ein Eckbereich näher gezeigt ist. Bei dieser Gestaltung ist die Form der Leuchte im Wesentlichen durch die Form des Lichtleitelements 1 bestimmt. Hier weist also auch die Leuchte insgesamt eine Rechteck-Form auf, so dass vier geradlinige Randbereiche 31, 32, 33, 34 gebildet sind. Dabei ist die LED-Lichtquelle 5 an einem ersten Randbereich 31 der vier Randbereiche 31, 32, 33, 34 ausgebildet. Die Reihe der Gehäuseöffnungen 11 erstreckt sich dabei über die gesamte Länge des betreffenden Randbereichs 31.

An einem dem ersten Randbereich 31 gegenüberliegenden zweiten Randbereich 32 kann eine analoge Gestaltung vorgesehen sein, so dass Licht auch hier einerseits in das Lichtleitelement 1 einstrahlt und andererseits auch nach oben zur Erzeugung der indirekten Beleuchtung abstrahlt. Es können auch alle vier Randbereiche 31, 32, 33, 34 entsprechend der obigen Beschreibung gestaltet sein.

Zur Abhängung der Leuchte können Seile 35 dienen, wobei vorzugsweise eine Niedervolt-Stromversorgung für die LED-Lichtquelle 5 über diese Seile 35 vorgesehen ist.

Allgemein eignet sich die Lichtabgabe-Anordnung besonders zur Gestaltung einer flach ausgestalteten "Flächenleuchte".

Wie in der Prinzip-Skizze der Fig. 7 gezeigt, kann zwischen dem Randflächenbereich 4 und den LEDs 6 ein Abstand a gebildet sein, so dass ein Teil des Lichts nicht in das Lichtleitelement 1 einfällt. So lässt sich erzielen, dass der Anteil des Lichts, der nach oben zur Erzielung der indirekten Beleuchtung abgegeben wird, besonders groß ist. Insbesondere ist die Gestaltung dabei derart, dass der Teil des Lichts, der nicht in das Lichtleitelement 1 einfällt, zumindest teilweise durch die Lichtöffnungen 8 hindurch strahlt.

Beispielsweise kann die Gestaltung derart sein, dass der Abstand a größer ist als der Abstand δ zwischen der Ebene E1 und der weiteren Ebene E2, vorzugsweise größer als das Eineinhalbfache des Abstands δ, besonders bevorzugt größer als das Doppelte des Abstands δ. Weiterhin vorzugsweise ist der Abstand a lediglich so groß gewählt, dass der Flanschbereich 9 nicht zu breit erscheint. Beispielsweise kann vorgesehen sein, dass der Abstand a kleiner ist als das Vierfache des Abstands δ, besonders bevorzugt kleiner als das Dreifache des Abstands δ.

Vorzugsweise ist dabei zwischen den LEDs 6 und dem Randflächenbereich 4 unterhalb der LEDs 6 ein Reflektor-Element 23 mit einer nach oben weisenden, insbesondere horizontalen, planen reflektierenden Fläche angeordnet, durch die Strahlen L1 des Lichts über den Randflächenbereich 4 in das Lichtleitelement 1 hineingelenkt werden und weitere Strahlen L2 des Lichts so umgelenkt werden, dass sie im Weiteren durch die Lichtöffnungen 8 hindurch gelangen. Vorzugsweise ist das Reflektor-Element 23 so gestaltet und angeordnet, dass sich die reflektierende Fläche zumindest in erster Näherung in der weiteren Ebene E2 erstreckt. Noch weitere Strahlen L3 des Lichts können ohne vorherige Wechselwirkung mit einer Fläche eines Bauteils der Leuchte durch die die Lichtöffnungen 8 hindurch gelangen.

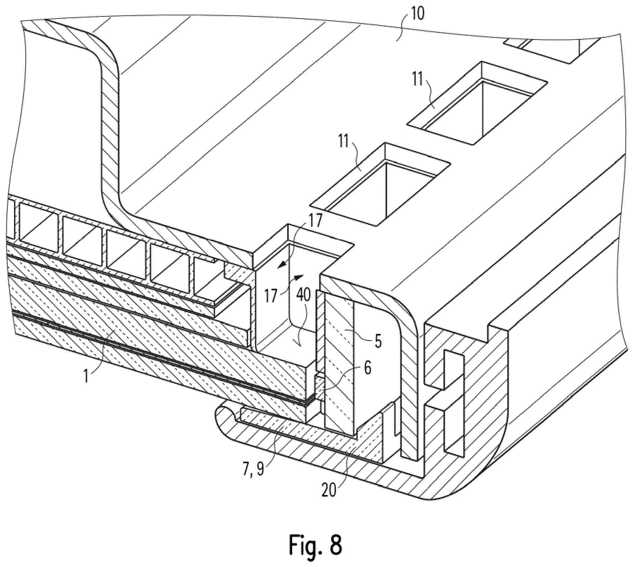

Alternativ kann, wie beispielsweise in Fig. 8 angedeutet, der Randflächenbereich 4 so dicht bei den LEDs 6 positioniert sein, dass praktisch das gesamte Licht in das Lichtleitelement 1 einstrahlt. In diesem Fall ist es vorteilhaft, wenn das Lichtleitelement 1 eine Oberflächenstrukturierung 40, beispielsweise in Form einer Aufrauhung aufweist, durch die ein Teil des in das Lichtleitelement 1 eingestrahlten Lichts zu den Lichtöffnungen 8 des Lichtführungselements 7 hin gelenkt wird.

Wenn, wie oben dargestellt ein Abstand a zwischen den LEDs 6 und dem Randflächenbereich gebildet ist, so dass ein Anteil des Lichts nicht in das Lichtleitelement 4 einfällt und auf die erste Seite S1 der Ebene L1 strahlt, lässt sich die vorteilhafte Lichtabgabe nach oben zur Erzielung der indirekten Beleuchtung auch grundsätzlich ohne das Lichtführungselement 7 erzielen.

Mit der beschriebenen Gestaltung lässt sich der Anteil des Lichts, der nach oben gerichtet zur Erzielung der indirekten Beleuchtung dient, innerhalb eines großen Bereichs wählen, also sozusagen sehr gut "einstellen". Dabei lassen sich für diesen Anteil Werte von weniger als 1% bis hin zu über 90% erzielen. So lässt sich der Anteil beispielsweise durch die Wahl der Größe und/oder Dichte der Lichtöffnungen 8 geeignet größer oder kleiner gestalten; auch durch Wahl des Abstands a lässt sich hierauf Einfluss nehmen. Auch durch entsprechende Auskoppelstrukturen, wie beispielsweise die oben erwähnte Oberflächenstrukturierung 40 lässt sich die Größe des Anteils gut variieren.

Die anmeldungsgemäße Leuchte kann beispielsweise - wie gezeigt - als Pendelleuchte gestaltet sein, Sie kann aber auch als Deckenanbauleuchte gestaltet sein. In der Regel ist im Fall einer Pendelleuchte eine intensivere Lichtabgabe nach oben erwünscht, im Fall einer Deckenanbauleuchte eine geringere Lichtabgabe nach oben. So lässt sich bewirken, dass im Fall einer Anbauleuchte lediglich eine "Lichtaura" durch das nach oben abgegebene Licht entsteht. Dementsprechend ist es vorteilhaft, im Fall einer Pendelleuchte mehr und/oder größere Lichtöffnungen 8 vorzusehen als im Fall einer Deckenanbauleuchte.

Im Allgemeinen eignet sich die Leuchte beispielsweise auch in Form einer Stehleuchte oder einer Wandleuchte bzw. grundsätzlich als Leuchte, die zur Erzielung einer indirekten Beleuchtung dient.

Wie beispielsweise in den Figuren 1 und 2 skizziert, kann oberhalb und/oder unterhalb des Lichtleitelements 1 wenigstens ein weiteres optisches Element 41, 42, 43, 44 vorgesehen sein. Beispielsweise kann unterhalb des Lichtleitelements 1 eine Streufolie und/oder um ein optisches Element mit Prismenstrukturen angeordnet sein und oberhalb des Lichtleitelements 1 kann ein Reflektor und/oder eine Hohlstegplatte angeordnet sein.

Durch den Flanschbereich 9 lässt sich, wie erwähnt, erzielen, dass für einen Betrachter, der die Leuchte von unten betrachtet, diejenigen Stellen, an denen der Anteil des Lichts nach oben umgelenkt wird, nicht zu erkennen sind. Daher ist es im Vergleich zum eingangsgenannte Stand der Technik auch nicht erforderlich, eine Diffusorfolie zu verwenden, um die betreffenden Stellen zu "kaschieren". Dies ist besonders vorteilhaft, denn ohne eine derartige Diffusorfolie lässt sich erzielen, dass die Leuchte bei Betrachtung von unten eine klare Durchsicht zu einem rückwärtigen Reflektor ermöglicht und so besonders brillant erscheint. Zudem ermöglicht der Verzicht auf eine entsprechende Diffusorfolie eine Erhöhung des Wirkungsgrads.

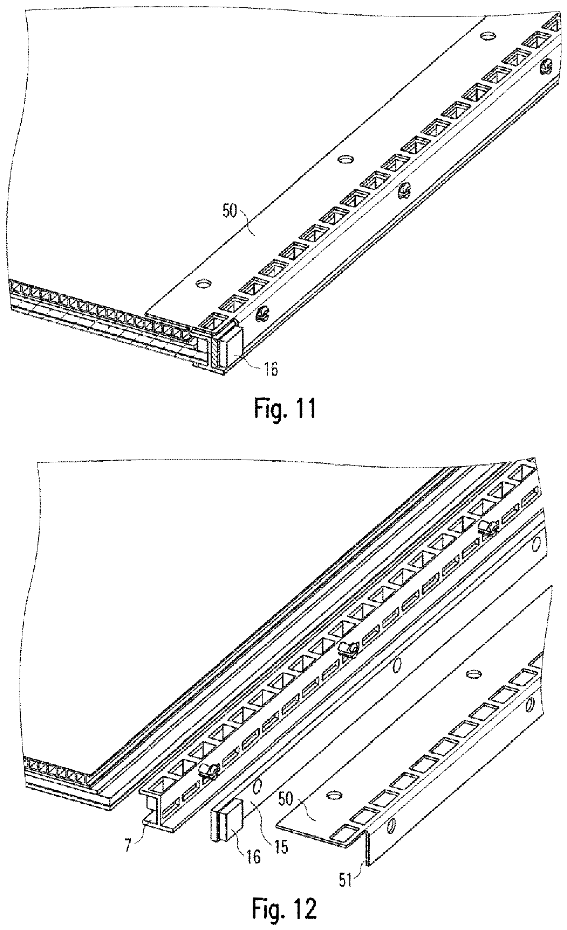

In Fig. 11 ist eine perspektivische Schnitt-Skizze zu einem Randbereich einer anmeldungsgemäßen Lichtabgabe-Anordnung mit einem Kühlkörper 50 gezeigt, Fig. 12 zeigt eine entsprechende Explosionsdarstellung. Die Platine 15 ist hierbei vorzugsweise zwischen dem Kühlkörper 50 und dem Lichtführungselement 7 positioniert angeordnet. Im gezeigten Beispiel hat der Kühlkörper 50 eine Aussparung 51, in welche das Anschlusselement 16 eingreifend angeordnet ist.

Weiterhin vorzugsweise weist der Kühlkörper 50 Angriffselemente auf, die zur Befestigung der Lichtabgabe-Anordnung an dem Gehäuse 10 gestaltet sind. Beispielsweise kann hier eine Schraubverbindung vorgesehen sein.

Auch der Kühlkörper 50 weist vorzugsweise Öffnungen auf, die Fortsetzungen der Lichtöffnungen 8 bilden.

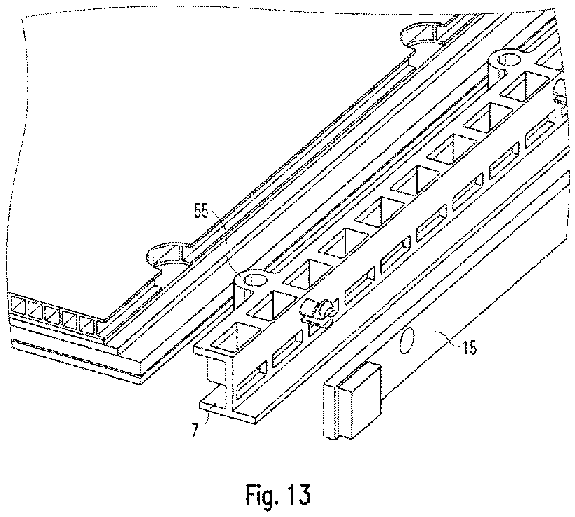

In Fig. 13 ist eine Variante gezeigt, bei der das Lichtführungselement 7 eine integrierte Schraubbuchse 55 zur Anbindung an das Gehäuse 10 aufweist.

## Patentansprüche

1. Leuchte, aufweisend
- ein plattenförmiges Lichtleitelement (1) mit einem ersten großen Oberflächenbereich (2), durch den eine Ebene (E1) festgelegt ist, einem, dem ersten großen Oberflächenbereich (2) gegenüberliegenden, zweiten großen Oberflächenbereich (3), durch den eine weitere Ebene (E2) festgelegt ist, und einem schmalen Randflächenbereich (4), durch den der zweite große Oberflächenbereich (3) mit dem ersten großen Oberflächenbereich (2) verbunden ist,
wobei durch die Ebene (E1) eine erste Seite (S1) von einer zweiten Seite (S2) getrennt ist und sich der zweite große Oberflächenbereich (3) auf der zweiten Seite (S2) der Ebene (E1) befindet,
- eine LED-Lichtquelle (5) mit LEDs (6) zum Abstrahlen eines Lichts, wobei die Gestaltung derart ist, dass das Licht zumindest teilweise über den Randflächenbereich (4) in das Lichtleitelement (1) einstrahlt und im Weiteren das Lichtleitelement (1) über den zweiten großen Oberflächenbereich (3) zur Erzielung einer direkten Beleuchtung wieder verlässt,
- ein längliches, sich entlang des Randflächenbereichs (4) erstreckendes Lichtführungselement (7) mit Lichtöffnungen (8), wobei die Gestaltung derart ist, dass ein Anteil des Lichts zu der ersten Seite (S1) strahlt und dabei zur Erzielung einer indirekten Beleuchtung durch die Lichtöffnungen (8) hindurchstrahlt, wobei das Lichtführungselement (7) weiterhin zum Halten der LED-Lichtquelle (5) gestaltet ist,
**dadurch gekennzeichnet,**
**dass** die Lichtöffnungen (8) als Reflektoren gestaltet und durch sich vertikal erstreckende Wandbereiche (17) begrenzt sind, die hochreflektierend gestaltet sind, wobei der Randflächenbereich (4) so dicht bei den LEDs (6) positioniert ist, dass praktisch das gesamte Licht in das Lichtleitelement (1) einstrahlt und das Lichtleitelement (1) eine Oberflächenstrukturierung aufweist, durch die ein Teil des in das Lichtleitelement (1) eingestrahlten Lichts zu den Lichtöffnungen (8) des Lichtführungselements (7) hin gelenkt wird.

2. Leuchte nach Anspruch 1,
**dadurch gekennzeichnet,**
**dass** das Lichtführungselement (7) weiterhin zum Halten des Lichtleitelements (1) gestaltet ist.

3. Leuchte nach Anspruch 1 oder 2,
**dadurch gekennzeichnet,**
**dass** die LED-Lichtquelle (5) durch das Lichtführungselement (7) so positioniert gehalten ist, dass sich die LEDs (6) zwischen der Ebene (E1) und der weiteren Ebene (E2) befinden, vorzugsweise mittig zwischen der Ebene (E1) und der weiteren Ebene (E2).

4. Leuchte nach einem der vorhergehenden Ansprüche,
**dadurch gekennzeichnet,**
**dass** das Lichtführungselement (7) einen, sich auf der zweiten Seite (S2) der Ebene (E1) parallel zu der Ebene (E1) erstreckenden Flanschbereich (9) zum Halten des Lichtleitelements (1) aufweist.

5. Leuchte nach Anspruch 4,
**dadurch gekennzeichnet,**
**dass** die Gestaltung weiterhin derart ist, dass sich die Lichtöffnungen (8) vollständig innerhalb einer mit Bezug auf die Ebene (E1) normalen Projektion des Flanschbereichs (9) befinden.

6. Leuchte nach einem der vorhergehenden Ansprüche,
**gekennzeichnet durch**
ein Gehäuse (10) mit Gehäuseöffnungen (11), die so gestaltet sind, dass der Anteil des Lichts, der durch die Lichtöffnungen (8) des Lichtführungselements (7) hindurch strahlt, zumindest teilweise auch durch die Gehäuseöffnungen (11) des Gehäuses (10) hindurch strahlt.

7. Leuchte nach einem der vorhergehenden Ansprüche,
**dadurch gekennzeichnet,**
**dass** zwischen dem Randflächenbereich (4) und den LEDs (6) ein Abstand (a) gebildet ist, so dass ein Teil des Lichts nicht in das Lichtleitelement (1) einfällt.

8. Leuchte nach Anspruch 7,
**dadurch gekennzeichnet,**
**dass** der Teil des Lichts, der nicht in das Lichtleitelement (1) einfällt, zumindest teilweise durch die Lichtöffnungen (8) hindurch strahlt.

9. Leuchte nach einem der vorhergehenden Ansprüche in Form einer Pendelleuchte oder einer Deckenanbauleuchte.

## Claims

1. A luminaire, comprising
- a plate-shaped light-conducting element (1) having a first large surface region (2) by which a plane (E1) is defined; a second large surface region (3) opposite the first large surface region (2), by which another plane (E2) is defined; and a narrow edge surface region (4) by which the second large surface region (3) is connected to the first large surface region (2),
wherein a first side (S1) is separated from a second side (S2) by the plane (E1), and the second large surface region (3) is located on the second side (S2) of the plane (E1),
- an LED light source (5) with LEDs (6) for emitting a light, wherein the design is such that the light at least partially radiates via the edge surface region (4) into the light-conducting element (1), and then leaves the light-conducting element (1) via the second large surface region (3) to achieve direct illumination,
- an elongated light guide element (7) that extends along the edge surface region (4) and has light openings (8), wherein the design is such that a portion of the light radiates to the first side (S1) and, in order to achieve indirect illumination, thereby radiates through the light openings (8), wherein the light guide element (7) is moreover designed to hold the LED light source (5),
**characterized in that**
the light openings (8) are designed as reflectors and are bordered by vertically extending wall regions (17) which are designed to be highly reflective, wherein the edge surface region (4) is positioned so closely to the LEDs (6) that practically all of the light radiates into the light-conducting element (1), and the light-conducting element (1) has a surface structuring via which a portion of the light radiated into the light-conducting element (1) is deflected toward the light openings (8) in the light guide element (7).

2. Luminaire according to Claim 1,
**characterized in that**
the light guide element (7) is furthermore designed to hold the light-conducting element (1).

3. Luminaire according to Claims 1 or 2,
**characterized in that**
the LED light source (5) is held in position by the light guide element (7) such that the LEDs (6) are located between the plane (E1) and the other plane (E2), preferably centrally between the plane (E1) and the other plane (E2).

4. Luminaire according to any one of the preceding claims,
**characterized in that**
the light guide element (7) for holding the light-conducting element (1) has a flange region (9) extending on the second side (S2) of the plane (E1), parallel to said plane (E1).

5. Luminaire according to Claim 4,
**characterized in that**
the design is in addition such that the light openings (8) are located entirely within a projection of the flange region (9), said projection being normal with respect to the plane (E1).

6. Luminaire according to any one of the preceding claims,
**characterized by**
a housing (10) with housing openings (11) that are designed such that the portion of the light that radiates through the light openings (8) in the light guide element (7) also radiates at least partially through the housing openings (11) of the housing (10).

7. Luminaire according to any one of the preceding claims,
**characterized in that**
a distance (a) is formed between the edge surface region (4) and the LEDs (6), such that a portion of the light does not enter the light-conducting element (1).

8. Luminaire according to Claim 7,
**characterized in that**
the portion of the light that does not enter the light-conducting element (1) at least partially radiates through the light openings (8).

9. Luminaire according to any one of the preceding claims, in the form of a pendant luminaire or ceiling-mounted luminaire.

## Revendications

1. Luminaire, comportant
- un élément de guide de lumière (1) sous la forme de plaque, doté d'une première grande zone de surface (2), par laquelle est défini un plan (E1), d'une seconde grande zone de surface (3) opposée à la première grande zone de surface (2), par laquelle est défini un autre plan (E2) et d'une zone de surface de bord (4) étroite, par laquelle la seconde grande zone de surface (3) est reliée à la première grande zone de surface (2),
un premier côté (S1) étant séparé d'un second côté (S2) par le plan (E1) et la seconde grande zone de surface (3) se trouvant du second côté (S2) du plan (E1),
- une source de lumière à DEL (5) dotée de DEL (6) destinées à émettre une lumière, la conception étant telle que la lumière irradie dans l'élément de guide de lumière (1) au moins en partie par le biais de la zone de surface de bord (4) et quitte par la suite de nouveau l'élément de guide de lumière (1) par le biais de la seconde grande zone de surface (3) pour obtenir un éclairage direct,
- un élément de conduction de lumière (7) oblong s'étendant le long de la zone de surface de bord (4), doté d'ouvertures de lumière (8), la conception étant telle qu'une partie de la lumière rayonne vers le premier côté (S1) et rayonne ainsi à travers les ouvertures de lumière (8) pour obtenir un éclairage indirect, l'élément de conduction de lumière (7) étant en outre conçu pour maintenir la source de lumière à DEL (5),
**caractérisé en ce**
**que** les ouvertures de lumière (8) sont conçues sous la forme de réflecteurs et sont limitées par des zones de paroi (17) s'étendant verticalement, qui sont conçues à haut pouvoir réfléchissant, la zone de surface de bord (4) étant positionnée si proche des DEL (6) que pratiquement toute la lumière irradie dans l'élément de guide de lumière (1) et l'élément de guide de lumière (1) comportant une structuration de surface par laquelle une partie de la lumière irradiée dans l'élément de guide de lumière (1) est dirigée vers les ouvertures de lumière (8) de l'élément de conduction de lumière (7).

2. Luminaire selon la revendication 1,
**caractérisé en ce**
**que** l'élément de conduction de lumière (7) est en outre conçu pour maintenir l'élément de guide de lumière (1).

3. Luminaire selon la revendication 1 ou 2,
**caractérisé en ce**
**que** la source de lumière à DEL (5) est maintenue par l'élément de conduction de lumière (7) dans une position telle que les DEL (6) se trouvent entre le plan (E1) et l'autre plan (E2), de préférence au milieu entre le plan (E1) et l'autre plan (E2).

4. Luminaire selon l'une quelconque des revendications précédentes,
**caractérisé en ce**
**que** l'élément de conduction de lumière (7) comporte une zone de rebord (9) s'étendant du second côté (S2) du plan (E1) parallèlement au plan (E1), pour maintenir l'élément de guide de lumière (1).

5. Luminaire selon la revendication 4,
**caractérisé en ce**
**que** la conception est en outre telle que les ouvertures de lumière (8) se trouvent entièrement dans une projection de la zone de rebord (9) perpendiculaire par rapport au plan (E1).

6. Luminaire selon l'une quelconque des revendications précédentes,
**caractérisé par**
un boîtier (10) doté d'ouvertures de boîtier (11), qui sont conçues de telle sorte que la partie de la lumière qui rayonne à travers les ouvertures de lumière (8) de l'élément de conduction de lumière (7), rayonne au moins en partie également à travers les ouvertures de boîtier (11) du boîtier (10).

7. Luminaire selon l'une quelconque des revendications précédentes,
**caractérisé en ce**
**qu'**un espace (a) est formé entre la zone de surface de bord (4) et les DEL (6), de telle sorte qu'une partie de la lumière ne pénètre pas dans l'élément de guide de lumière (1).

8. Luminaire selon la revendication 7,
**caractérisé en ce**
**que** la partie de la lumière qui ne pénètre pas dans l'élément de guide de lumière (1) rayonne au moins en partie à travers les ouvertures de lumière (8).

9. Luminaire selon l'une quelconque des revendications précédentes, sous la forme d'un luminaire suspendu ou d'un luminaire à fixer au plafond.
